# EUROPÄISCHE PATENTSCHRIFT

(11) **EP 3 879 760 B1**
(45) Veröffentlichungstag und Bekanntmachung des Hinweises auf die Patenterteilung: **24.09.2025**
(21) Anmeldenummer: 20161982.2
(22) Anmeldetag: 10.03.2020
(51) Int. Cl.: H04L 41/0806, H04L 12/28

(54) **KONFIGURATIONSSTACK FÜR NETZWERKINSTALLATION**
NETWORK INSTALLATION CONFIGURATION STACK
PILE DE CONFIGURATION POUR L'INSTALLATION DE RÉSEAU

(43) Veröffentlichungstag der Anmeldung: 15.09.2021
(73) Patentinhaber: ise Individuelle Software und Elektronik GmbH, 26122 Oldenburg (DE)
(72) Erfinder: KESSLER, Jan, 26129 Oldenburg (DE); MARKS, Henrik, 26131 Oldenburg (DE); Sahm, Christoph, 26131 Oldenburg (DE)
(74) Vertreter: Angerhausen, Christoph

(56) Entgegenhaltungen:
- WO-A1-2009/024179
- ANONYMOUS: "Funktion (Mathematik) - Wikipedia - Version vom 4. Februar 2020", 4 February 2020 (2020-02-04), XP055729836, Retrieved from the Internet <URL:https://de.wikipedia.org/w/index.php?title=Funktion_(Mathematik)&oldid=196499947> [retrieved on 20200911]

## Beschreibung

### GEBIET

Die vorliegende Erfindung bezieht sich auf Vorrichtungen und Verfahren zur vereinfachen Installation von Komponenten eines Netzwerks, insbesondere auf dem Gebiet der Haustechnik und deren Vernetzung.

### HINTERGRUND

Bei der Vernetzung von Hausgeräten, beispielsweise Jalousien, Lichtquellen, Heizung und Unterhaltungselektronik, sollen neue Komponenten mit möglichst geringem Aufwand in ein bestehendes Netzwerk integriert werden. Komponenten werden hier auch als Netzwerkknoten oder -elemente oder Netzwerkkomponenten bezeichnet. Bekannte Protokolle zur Realisierung solcher Netzwerke und Einbindung neuer Komponenten sind etwa KNX, DALI, EIB.

Bei der Einbindung einer neuen netzwerkfähigen Komponente, beispielsweise einer Jalousie oder Lichtquelle, in das Netzwerk wird bei bestimmten Standards auf eine Datenbank zugegriffen, in der die Hersteller von Komponenten Spezifikationen von Funktionalitäten dieser Komponenten ablegen. Diese Funktionalitäten werden häufig jedoch auch in Firmware oder sonstigem Speicher einer Komponente abgelegt. Auf die genannten Funktionalitäten kann ein Installateur mittels dafür vorgesehener Anwendungen zugreifen, um die Funktionalitäten sowie deren Konfigurationsmöglichkeiten zu erkennen. Die in der Datenbank oder auf der Firmware abgelegten möglichen Konfigurationen sind beispielsweise in Form von Parametern und zugeordneten möglichen Parameterwerten abgelegt. Durch Setzen dieser Parameter auf einen bestimmten Parameterwert kann die Funktionalität der Komponente gesteuert werden. Handelt es sich bei der Komponente etwa um eine Lichtquelle, könnte ein Parameter einen Schaltmodus angeben, beispielsweise ob die Lichtquelle ein- oder ausgeschaltet wird oder ob sie stufenlos gedimmt werden kann. Handelt es sich bei der Komponente um eine Jalousie, könnte ein Parameter einen "Verschattungsmodus" angeben, beispielsweise einen ersten Modus, in dem die Lamellen der Jalousie offen oder geschlossen sind, und einen zweiten Modus, in dem die Lamellen herauf- oder heruntergelassen werden. Zugeordnete Parameterwerte bezeichnen entsprechende Wertebereiche, beispielsweise An/Aus für eine Lichtquelle im ersten Schaltmodus, oder "0..1" für eine Lichtquelle im zweiten Schaltmodus, ferner Offen/Geschlossen für eine Jalousie im ersten Modus oder "0..1" im zweiten Modus. Wird eine solche Komponente in das Netzwerk eingebunden, müssen Schaltelemente im Netzwerk mit diesen Parametern verbunden werden, so dass beispielsweise das Auslösen eines bestimmten Schaltelements einen bestimmten Modus der Komponente anwählt und ein zweites Auslösen des Schaltelements beziehungsweise Auslösen eines zweiten Schaltelements einen Wert für die Komponente festsetzt, den diese dann ausführt. So kann im Fall einer Lichtquelle das Betätigen eines ersten Schalters die Lichtquelle ein- oder ausschalten und das Betätigen eines zweiten Schalters den Schaltmodus auf stufenloses Dimmen setzen; nachfolgende Betätigung des ersten Schalters könnte wiederum einen Dimmwert für die Lichtquelle festsetzen. Analoge Schaltverbindungen sind mit einer Jalousie und mit anderen Komponenten möglich und erforderlich.

Um solche Verbindungen zwischen Schaltelementen im Netzwerk und Komponenten zu definieren, verfügt ein Netzwerk über einen Protokollstack, der es erlaubt, Signale bestimmter Komponenten mit Funktionen anderer oder auch identischer Komponenten zu verknüpfen. Ein Installateur greift hierzu auf die von einer Komponente bereitgestellten Parameter und deren Werte zurück und programmiert die Verknüpfungen nach vorgegebenen Anforderungen.

Ein Beispiel für Parametersätze und deren Verwendung zur Konfiguration einer Komponente mittels Modi ist der KNX-Standard mit den Modi "E-Mode" und "S-Mode".

WO 2009/024179 offenbart einen Gemeinschaftsparametersatz, der innerhalb einer Peer-to-Peer-Netzwerkarchitektur in einem Zentralgerät einer Schaltanlagenstation gespeichert ist. Feldgeräte können den Gemeinschaftsparametersatz komplett oder in Teilen von der Schaltanlagenstation laden, ihren zugehörigen Feldgeräteparametersatz aus dem geladenen Gemeinschaftsparametersatz gewinnen und sich gemäß dem gewonnenen Feldgeräteparametersatz parametrieren.

### ZUSAMMENFASSUNG

Ausführungsformen der vorliegenden Erfindung umfassen eine Vorrichtung gemäß dem beigefügten Anspruch 1.

Vorteilhafterweise ist das Adaptermodul ein Bestandteil des zweiten Konfigurationsstacks.

Insbesondere kann die erste und die zweite Vielzahl an Parametern mit zugeordneten Parameterwerten als Variable implementiert sein, die einen Aufzählungstyp umfasst und die Parameter den zugeordneten Parameterwerten zuordnet.

In einer vorteilhaften Ausführungsform gibt der Schreibzugriff ferner an, ob der Parameter in der ersten oder der zweiten Vielzahl gesetzt werden soll, und die Vorrichtung setzt den Parameter in der betreffenden Vielzahl.

Auch kann die Vorrichtung eingerichtet sein, das Prüfen anhand der Datenstruktur des Adaptermoduls vorzunehmen.

Ausführungsformen der Erfindung umfassen ferner ein Verfahren gemäß dem beigefügten Anspruch 6.

Vorteilhafterweise umfasst das Verfahren: Als Antwort auf einen Schreibzugriff Ermitteln, ob der Parameter in der ersten oder der zweiten Vielzahl gesetzt werden soll, und Setzen des Parameters in der betreffenden Vielzahl.

In einer vorteilhaften Ausführungsform wird das Prüfen anhand einer Datenstruktur eines Adaptermoduls des Netzknotens vorgenommen, wobei die Datenstruktur die erste Vielzahl auf die zweite Vielzahl abbildet.

### KURZE BESCHREIBUNG DER ZEICHNUNGEN

- Figur 1: zeigt beispielhaft Bestandteile einer Netzwerkkomponente, die zu deren Konfiguration im Netzwerk herangezogen werden.
- Figur 2: zeigt eine erfindungsgemäße Anordnung von Bestandteilen zur Konfiguration einer Netzwerkkomponente.
- Figur 3: zeigt ein erfindungsgemäßes Verfahren zur Verarbeitung eines Zugriffs auf eine Netzwerkkomponente.

### AUSFÜHRLICHE BESCHREIBUNG

Die heute in der Gebäudetechnik verwendeten Komponenten weisen mitunter eine Vielzahl an Parametern auf, die es ermöglichen, diese Komponenten aus der Ferne, nämlich über andere Komponenten im gleichen Netzwerk, präzise zu steuern. Parameter und zugeordnete mögliche Parameterwerte können zudem voneinander abhängen, so dass die Konfiguration solcher Komponenten sehr komplex und somit für den Installateur unübersichtlich sein kann. Dies ist insbesondere dann nachteilig, wenn für bestimmte Komponenten bestimmte konkrete Konfigurationen häufiger als andere verwendet werden.

Um den Installateur bei der Verwendung solcher Konfigurationen zu unterstützen, legen die Hersteller von Komponenten in einer Firmware der Komponente einen reduzierten Parametersatz ab, der eine Teilmenge der möglichen Parameter darstellt. Die vollständigen Parameter sind jedoch parallel über eine vom Hersteller gepflegte Datenbank zugänglich, so dass auch kompliziertere Konfigurationen möglich sind; die vollständigen Parameter werden alternativ ebenfalls in der Firmware mitgeliefert. Das Bereitstellen von einfachen und vollständigen Parametersätzen vereinfacht die Konfiguration durch den Installateur, verursacht jedoch einen erhöhten Aufwand auf Herstellerseite; zwei Parametersätze müssen verwaltet werden.

Die Netzwerkkomponente verfügt über zwei parallele Stacks, die gemäß einem Netzwerkprotokoll des Netzwerks implementiert sind. Der erste Stack dient dem Zugriff auf den vollständigen Parametersatz, der zweite Stack dient dem Zugriff auf den reduzierten Parametersatz. Die zu integrierende Komponente wird mit zwei Anwendungen ausgeliefert; die erste Anwendung nutzt den vollständigen Parametersatz, die zweite Anwendung den reduzierten Parametersatz.

Ausführungsformen der Erfindung umfassen ebenfalls zwei Stacks, die analog zu den oben genannten implementiert sind. Jedoch verfügt der zweite Stack zusätzlich über ein Adaptermodul. Dieses ist entweder fest in den zweiten Stack integriert oder extern von diesem gespeichert und mittels einer API mit diesem verbunden. Das Adaptermodul bildet eine Schnittstelle zu dem ersten Stack und definiert Abbildungen zwischen dem vollständigen Parametersatz des ersten Stacks und dem reduzierten Parametersatz des zweiten Stacks. Diese Abbildungen können beispielsweise durch eine Datenstruktur definiert werden, in der für ausgewählte Parameter des vollständigen Parametersatzes ein entsprechender Parameter des reduzierten Parametersatzes angegeben wird. Vorzugsweise umfasst die Erfindung lediglich eine Anwendung, die eingerichtet ist, auf den vollständigen Parametersatz zuzugreifen.

Die Auswahl der Parameter kann herstellerseitig festgelegt werden, beispielsweise durch Programmierung des Adaptermoduls. Darüber hinaus kann das Adaptermodul so eingerichtet sein, dass es selbständig prüft, ob die ausgewählten Parameter aus dem vollständigen Parametersatz in dem vollständigen Parametersatz tatsächlich existieren, und kann die Abbildung für diese Parameter deaktivieren. Dies hat zur Folge, dass solche Parameter für die weitere Konfiguration mittels des zweiten Stacks dem Installateur nicht angezeigt werden und somit nicht konfiguriert werden können, solange die Konfiguration anhand des reduzierten Parametersatzes vorgenommen wird. Auf diese Weise verhindert die Erfindung, dass nichtkonfigurierbare Parameter angezeigt und verwendet werden. Ein solches selbständiges Prüfen ist insbesondere dann von Vorteil, wenn der vollständige Parametersatz durch den Hersteller aktualisiert wird und bestimmte Parameter, die zuvor für Abbildungen ausgewählt wurden, umbenannt oder entfernt wurden; in diesem Fall erscheinen die betroffenen Parameter nicht mehr in dem reduzierten Parametersatz.

Erfindungsgemäß kann auf redundante Speicherung von Parametern des reduzierten Satzes vollständig verzichtet werden; stattdessen werden mithilfe des Adaptermoduls und darin spezifizierter Abbildungen Verweise auf Parameter des vollständigen Parametersatzes verwendet, deren Gesamtheit den so reduzierten Parametersatz darstellt. Auf diese Weise ermöglicht die Erfindung nicht nur die bereits erwähnte vorteilhafte Anpassung an Parameteraktualisierungen, sondern spart auch Speicherplatz ein. Zudem entfällt die doppelte Bereitstellung von Parametern und die im Stand der Technik erforderliche Pflege von zwei Parametersätzen.

Parameter können mit Werten belegt sein, beispielsweise einer natürlichen oder binären Zahl oder einem Modus. Bei der durch das Adaptermodul implementierten Abbildung von Parametern werden die zugeordneten Parameterwerte entweder mit abgebildet oder auf einen eigenen Wert gesetzt. Beispielsweise kann ein Parameter in dem vollständigen Parametersatz als Parameterwert eine Einschalthelligkeit zwischen 0 und 100% angeben. Wird dieser Parameter durch den Hersteller für die Abbildung in den reduzierten Parametersatz ausgewählt, kann der zugeordnete Parameterwert auf eine konkrete Einschalthelligkeit zwischen 0 und 100% gesetzt werden. Ändert ein Installateur diesen Wert, greifen bestimmte erfinderische Maßnahmen, die weiter unten beschrieben werden.

Der Komponente kann neben dem vollständigen Parametersatz auch ein Satz möglicher Kommunikationsdatenpunkte oder auch Typen von Kommunikationsdatenpunkten zugeordnet sein, von denen aus auf die Komponente zugegriffen werden kann. Als Kommunikationsdatenpunkt wird ein Objekt bezeichnet, mit dem netzwerkintern eine Komponente, beispielsweise ein Schalt- oder Reglerelement, dargestellt wird, einschließlich zulässiger Eingabe- und Ausgabeformate sowie Parameter und deren Werte. Ein solches Objekt kann auch eine App darstellen und auf einem Mobiltelefon oder sonstigem Mobilgerät installiert sein, so dass von dieser App aus Einstellungen an Netzwerkkomponenten vorgenommen werden können. Indem die Komponente neben Parametersätzen auch Kommunikationsdatenpunkte beziehungsweise deren Typen angibt, wird der Installateur darin unterstützt, unter den vorhandenen Kommunikationsdatenpunkten diejenigen mit der neuen Komponente zu verknüpfen, die durch diese Angaben definiert werden.

Analog zu der Bereitstellung eines reduzierten Parametersatzes durch das Adaptermodul kann dieses auch eingerichtet sein, Kommunikationsdatenpunkte, die der Komponente in deren Firmware beziehungsweise in einem Eintrag in einer Datenbank zugeordnet sind, auf einen reduzierten Satz abzubilden, der eine Teilmenge des vollständigen Satzes ist. Dieser reduzierte Satz kann, ebenso wie der reduzierte Parametersatz, aus Verweisen auf einen vollständigen Satz von Kommunikationsobjekten bestehen, so dass die Erfindung eine vereinfachte und zuverlässige Konfiguration ermöglicht.

Die Erfindung erlaubt einem Installateur, eine Komponente in einem von zwei Modi einzubinden: Der Installateur kann wählen, ob er die Konfiguration der Komponente anhand des vollständigen Parametersatzes oder anhand des reduzierten Parametersatzes vornimmt. Die Auswahl des Modus erfolgt über eine Anwendung mit einer Benutzeroberfläche. Die Anwendung kann auf einem Rechner ablaufen, der in das Netzwerk eingebunden ist. Die Anwendung setzt auf dem Protokollstack des Netzwerks auf und ist daher in der Lage, die Topologie des Netzwerks, also die vorhandenen Komponenten, darzustellen. Die Anwendung erkennt die einzubindende Komponente und zeigt diese ebenfalls an, vorzugsweise kombiniert mit den bereitgestellten Parametersätzen. Anhand der Anwendung kann der Installateur Kommunikationsdatenpunkte und Parameter auswählen und Verknüpfungen zwischen Kommunikationsdatenpunkten vornehmen, sowie einstellen, welche Ein- und Ausgaben eines ausgewählten Kommunikationsdatenpunktes mit Ein- und Ausgaben der neuen Komponente korrespondieren. Auf diese Weise ermöglicht die Anwendung, die Funktionalität einer Komponente durch einen oder mehrere Kommunikationsdatenpunkte in dem Netzwerk anzusteuern.

Der Installateur kann zunächst frei wählen, ob anhand des vollständigen oder anhand des reduzierten Parametersatzes konfiguriert werden soll. Wählt der Installateur eine Konfiguration anhand des vollständigen Parametersatzes, wird in einer Ausführungsform die Möglichkeit deaktiviert, bei einem zukünftigen Konfigurationsvorgang wieder auf den reduzierten Parametersatz zurückzugreifen. Dies kann vorteilhaft sein, um den Fall auszuschließen, dass bei der Konfiguration mittels vollständigem Parametersatz Parameter eingestellt werden, die in dem reduzierten Parametersatz nicht enthalten oder mit dessen Parameterbelegung nicht kompatibel sind. Die Erfindung vermeidet somit beispielsweise, dass bestimmte Parameterabhängigkeiten verletzt werden.

In einer konkreten Ausführungsform sind einer Komponente, hier einer Lichtquelle, die Parameter A, B, und C als vollständiger Parametersatz zugeordnet. Der Parameter A entspricht dem Einstellen der Lichtquelle auf einen Wert zwischen 0 und 100, wobei die Lichtquelle mit dem Wert 0 ausgeschaltet und mit dem Wert 100 auf volle Leuchtstärke eingestellt wird. Der Parameter B entspricht einem Speichern des Helligkeitswertes und ist beispielsweise vorgesehen unmittelbar bevor die Lichtquelle ausgeschaltet wird - bei Erhalt eines Aufrufs zum Ausschalten wird also zunächst der aktuelle Helligkeitswert gespeichert. Der Parameter C entspricht einem Einstellen der Lichtquelle auf den gespeicherten Helligkeitswert. Die Parameter B und C können binäre Werte sein, die angeben, ob gespeichert beziehungsweise entsprechend eingestellt werden soll.

Wählt der Installateur den vollständigen Parametersatz zur Konfiguration einer Lichtquelle, kann er die Parameter mit einer oder mehreren Komponenten im Netzwerk verknüpfen. Beispielsweise kann ein Schalter mit dem Parameter A verknüpft werden, wobei eine erstmalige Betätigung die Helligkeit auf 0 setzt und eine zweite Betätigung die Helligkeit auf 100 setzt. Ferner kann ein Regler im Netzwerk mit dem Parameter verknüpft werden, wobei eine Aufwärts- oder Abwärtsbetätigung des Reglers die Helligkeit auf einen entsprechenden Wert zwischen 0 und 100 setzt. Zudem kann der Regler mit dem Parameter B verknüpft werden, wobei eine Betätigung des Reglers den neu eingestellten Wert als letzten Wert speichert. Ein weiterer Schalter kann mit Parameter B und C verknüpft werden, wobei eine erste Betätigung des weiteren Schalters die Lichtquelle auf die als letzten Wert gespeicherte Helligkeit setzt, und wobei eine zweite Betätigung des weiteren Schalters die Lichtquelle auf den Wert 0 setzt beziehungsweise ausschaltet. Die genannten Schalter und der Regler werden durch einen Satz von Kommunikationsdatenpunkten charakterisiert. So entspricht dem Parameter A ein Schalter oder Regler und den Parametern B und C ein Regler. Angaben über diese Kommunikationsdatenpunkte in der Anwendung erleichtern dem Installateur die beschriebene Zuordnung und Verknüpfung von Schaltern und Reglern mit Parametern.

In dieser Ausführungsform kann ein reduzierter Parametersatz beispielsweise lediglich den Parameter A umfassen. Ein solcher reduzierter Parametersatz eignet sich etwa für Installationen, in denen Ein- und Ausschalten, auch Dimmen, einer Lichtquelle ermöglicht werden soll, nicht jedoch das Speichern und Aufrufen von Helligkeitswerten. Entsprechende Kommunikationsdatenpunkte sind weiterhin Schalter und Regler. Der reduzierte Parameter ist eine Teilmenge der vollständigen Parameter und kann wie zuvor beschrieben mit Schaltern und Reglern verknüpft werden. Insbesondere kann es sich bei den Parametern in ihrer gespeicherten Form lediglich um Verweise handeln, also beispielsweise um Adressen oder Zeiger, die entsprechende Parameter des vollständigen Satzes bezeichnen. In dem Adaptermodul ist eine Abbildung zwischen beiden Parametersätzen abgelegt, die in dieser Ausführungsform lediglich einen Verweis auf den Parameter A aus den vollständigen Parametern enthält. Auf diese Weise wird gewährleistet, dass bei einer künftigen Aktualisierung des Parameters A durch den Hersteller, beispielsweise eine Eingrenzung auf einen Wertebereich von 0 bis 50 anstatt 0 bis 100, sofort in dem reduzierten Parametersatz sichtbar wird.

Ein alternativer reduzierter Parametersatz kann Parameter A, B, und C umfassen, die sämtlich Abbildungen des Parameters A aus dem vollständigen Satz darstellen. Wie bereits erläutert, betrifft der vollständige Parameter A in dieser Ausführungsform das Einstellen einer Lichtquelle auf einen Wert zwischen 0 und 100. Der reduzierte Parameter A kann in diesem Beispiel das Einstellen auf den Wert 0 definieren, der reduzierte Parameter B kann Einstellen auf den Wert 50 definieren, und der reduzierte Parameter C Einstellen auf den Wert 100. Die Parameter B und C des vollständigen Parametersatzes werden im reduzierten Parametersatz nicht verwendet. Das Beispiel verdeutlicht die Unterscheidung zwischen Parametern und Parameterwerten: Der Parameter A des vollständigen Parametersatzes wird dreimal abgebildet, jeweils mit einem anderen Parameterwert 0, 50 oder 100. Die Abbildung wird implementiert durch einen jeweiligen Verweis auf den Parameter A des vollständigen Satzes; jedoch müssen die Parameterwerte 0, 50 und 100 gespeichert werden, anstatt durch Verweise übernommen zu werden. Je nach Typ eines Parameters können jedoch auch Parameterwerte durch Verweis referenziert werden, beispielsweise wenn ein reduzierter Parameter als Parameterwert den vom entsprechenden vollständigen Parameter vorgesehenen Parameterwert unverändert übernimmt. Ob Parameterwerte in den reduzierten Satz übernommen werden, kann vom Hersteller beim Festlegen des reduzierten Satzes festgelegt werden; der Installateur ist beim Einrichten der Komponente ohnehin frei in der Definition von Parameterwerten. Spätestens bei einer solchen Neudefinition werden auch die Parameterwerte direkt gespeichert, ohne dass ein Verweis auf entsprechende Parameterwerte des vollständigen Satzes verwendet wird.

Wählt der Installateur bei einer erstmaligen oder weiteren Konfiguration einer Komponente den vollständigen Parametersatz, verhindert die Erfindung, beispielsweise durch Setzen und späteres Prüfen eines Flags, dass der reduzierte Parametersatz in der Folge erneut ausgewählt wird. Im konkreten Ausführungsbeispiel wird auf diese Weise verhindert, dass die Parameter B und C, die nicht in den reduzierten Parametern enthalten sind, vorübergehend ausgewählt und verknüpft werden und in der Folge, bei erneuter Auswahl des reduzierten Satzes, nicht mehr angezeigt werden können.

In einer anderen konkreten Ausführungsform ist einer anderen Komponente, hier ein Aktuator zum Öffnen und Schließen eines Fensters, ein vollständiger Parametersatz zugeordnet, der einen Parameter A zum Kippen und Schließen des Fensters sowie einen Parameter B zum Einstellen einer Zeitdauer und nachfolgendem Schließen des Fensters enthält. Nach Auswahl des vollständigen Parametersatzes kann der Installateur den ersten Parameter mit einem Schalter verknüpfen und den zweiten Parameter mit einem Regler oder einem Display mit einer Zeitauswahl verknüpfen. Ein reduzierter Parametersatz könnte in diesem Beispiel lediglich den Parameter A umfassen; dies erlaubt für einfachere Installationen ein Öffnen und Schließen des Fensters. Wie bereits erläutert, können die zur Verknüpfung stehenden Elemente durch Kommunikationsdatenpunkte spezifiziert sein.

Darüber hinaus umfasst die Erfindung eine einzelne Anwendung, die auf dem ersten Stack aufsetzt und auf den ersten Parametersatz zugreift. Die Anwendung dient beispielsweise zum Auslesen von Parametern und deren Werten. Die Werte können, auch wenn lediglich der reduzierte Parametersatz verwendet wird, entweder separat im reduzierten und vollständigen Satz gespeichert sein, oder lediglich im vollständigen Parametersatz. Im ersten Fall greift die Anwendung zum Auslesen von Werten des ersten Parametersatzes auf das Adaptermodul zu, unter Angabe eines oder mehrerer Parameter, und erhält von dem Adaptermodul die entsprechenden Parameterwerte. Im zweiten Fall greift die Anwendung lediglich auf den vollständigen Parametersatz zu, um Parameterwerte zu lesen. Wird nicht der reduzierte, sondern der vollständige Parametersatz verwendet, verfährt die Anwendung wie im zweiten Fall.

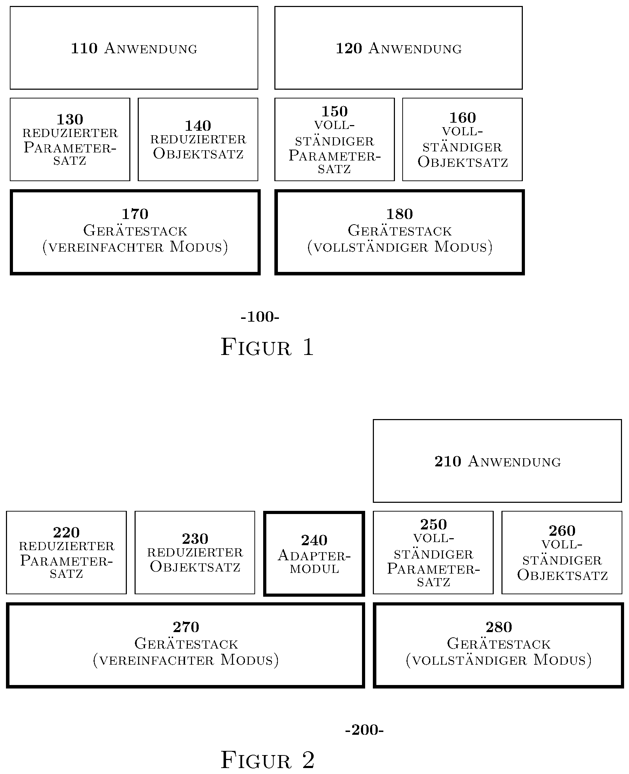

Figur 1 zeigt eine herkömmliche Implementierung von Gerätestacks in einem Netzwerk zur Gebäudeautomation. Die Gerätestacks werden auch als Konfigurationsstacks oder einfach als Stacks bezeichnet. Gezeigt ist ein erster Gerätestack 170 in einem vereinfachten Modus sowie ein zweiter Gerätestack 180 in einem vollständigen Modus. Beide Gerätestacks implementieren Schichten eines Protokollstacks des Netzwerks, und werden mit einem zu integrierenden Gerät oder einer Komponente mitgeliefert. Alternativ handelt es sich bei beiden Gerätestacks um Module, die durch das Netzwerk für neue Geräte und Komponenten bereitgestellt werden, beispielsweise von einem Server. Beide Gerätestacks enthalten eine API, über die Funktionen des Netzwerkprotokolls sowie Funktionen der Komponente aufgerufen werden können.

Bei Installation einer neuen Komponente werden dem Installateur zwei Modi zur Auswahl angezeigt, beispielsweise über eine Konfigrationswendung, die etwa auf einem Server oder einer anderen Komponente in dem Netzwerk läuft. Alternativ kann der Installateur direkt an der Komponente eine von zwei Anwendungen 110 und 120 aufrufen und sich so für einen der beiden Modi entscheiden. Der erste Modus betrifft eine vereinfachte Konfiguration mit Zugriff auf einen reduzierten Parametersatz, während der zweite Modus eine Konfiguration mit Zugriff auf den vollständigen Parametersatz der Komponente betrifft.

Der Gerätestack 180 ist der vollständigen Konfiguration zugeordnet. Auf dem Gerätestack 180 setzt ein vollständiger Parametersatz 150 auf. Optional wird auch ein vollständiger Satz von Kommunikationsdatenpunkten 160 bereitgestellt, der Objekte des Netzwerks bezeichnet, auf die die Parameter angewendet werden können. Ferner setzt auf den Gerätestack 180 eine Anwendung 120 auf, die auf der Komponente oder einem anderen Ort im Netzwerk aufgerufen kann und die auf den vollständigen Parametersatz, optional auch auf die Kommunikationsdatenpunkte zugreift. Mit dieser Anwendung erhält der Installateur die Möglichkeit, Parameter auszuwählen, mit konkreten Parameterwerten zu konfigurieren und die Parameter mit Kommunikationsdatenpunkten im Netz zu verbinden. Wie bereits gezeigt, kann ein Installateur beispielsweise einen Lichtschalter im Netzwerk mit einem Parameter zum Steuern der Komponente, etwa einer Lichtquelle, verknüpfen. Gegebenenfalls wird durch zugeordnete Kommunikationsdatenpunkte bestimmt, welche Art von Netzwerkelement für eine solche Verknüpfung infrage kommt; beispielsweise kann der vollständige Objektsatz 160 Typen von Kommunikationsdatenpunkten definieren, und der Installateur erhält eine Liste von Kommunikationsdatenpunkten dieser Typen, die in dem Netzwerk existieren.

Der parallele Gerätestack 170 ist der vereinfachten Konfiguration zugeordnet. Auf dem Gerätestack 170 setzt ein reduzierter Parametersatz 130 auf, der eine Auswahl von Parametern des vollständigen Parametersatzes 150 enthält. Optional ist daneben ein reduzierter Satz von Kommunikationsdatenpunkten 140 gezeigt; dieser bezeichnet Objekte in dem Netzwerk, die mit den Parametern des reduzierten Satzes verknüpft werden können.

Figur 2 zeigt eine erfindungsgemäße Ausführungsform. Die gezeigte Ausführungsform umfasst einen ersten Gerätestack 270 in einem vereinfachten Modus sowie einen zweiten Gerätestack 280 in einem vollständigen Modus. Beide Gerätestacks unterscheiden sich nicht von den in Figur 1 gezeigten Gerätestacks 170 und 180. Auch die Verwendung von Modi während der Installation stimmt mit den bereits erläuterten Maßnahmen überein.

Der vollständige Parametersatz 250 sowie der vollständige Satz von Kommunikationsdatenpunkten 260 entspricht dem bereits erläuterten Parametersatz 150 beziehungsweise dem Kommunikationsdatenpunktesatz 160.

Der reduzierte Parametersatz 220 enthält eine Auswahl von Parametern aus dem vollständigen Satz 250, und umfasst eine Auswahl von Parametern des vollständigen Parametersatzes 260. Der reduzierte Parametersatz 220 kann mit dem vollständigen Parametersatz 260 auch identisch sein (unechte Teilmenge). Anders als bei dem Parametersatz 130 der Figur 1 besteht der Parametersatz 130 jedoch nicht aus Kopien der Parameter des vollständigen Parametersatzes, sondern wird durch Verweise auf diese implementiert. In der gezeigten Ausführungsform wird zu diesem Zweck ein Adaptermodul 240 bereitgestellt, das Parameter des vollständigen Satzes 250 auf zugeordnete Parameter des reduzierten Satzes 220 abbildet. Diese Abbildung kann durch eine geeignete Datenstruktur implementiert sein, beispielsweise eine Tabelle, einen assoziativen Array oder ein Objekt mit entsprechenden Variablen und Aufrufmethoden. Bevorzugt werden ferner Routinen bereitgestellt, mit denen die Liste aller Abbildungen, die Liste aller vollständigen Parameter, die Liste aller reduzierten Parameter angezeigt werden können, oder mit denen anhand eines konkreten Parameters des vollständigen Satzes der zugeordnete Parameter des reduzierten Satzes angezeigt werden kann, soweit dieser existiert. In einer Ausführungsform wird jeder reduzierte Parameter als ein Verweis, beispielsweise eine Zeigervariable, auf einen zugeordneten Parameter des vollständigen Satzes gespeichert. Dieser Verweis kann ohne zugeordneten Parameterwert gespeichert werden; in diesem Fall wird bei Verwendung des Verweises auf den Parameterwert des zugeordneten "vollständigen" Parameters zugegriffen. Hersteller können den Verweis jedoch auch mit einem konkreten Parameterwert versehen, der einem Wert aus einem Wertebereich des vollständigen Parameters entspricht; Beispiele für solche Parameterwerte wurden hier bereits angegeben.

Figur 2 zeigt ferner eine einzelne Anwendung 210. Diese Anwendung dient, ähnlich wie die oben beschriebene Anwendung 120, zum Zugriff auf Parameter der neuen Komponente. Die Anwendung 210 greift ausschließlich auf den vollständigen Parametersatz zu. Wird die Komponente in einem vereinfachten Modus verwendet, sind zwei alternative Ausführungsformen möglich. Entweder referenzieren die Parameter des reduzierten Satzes Parameterwerte des vollständigen Satzes; dann kann die Anwendung direkt auf den vollständigen Parametersatz zugreifen, um diese auszulesen. Oder die Parameter des reduzierten Parametersatzes speichern Parameterwerte separat; dann können diese Werte mittels des Adaptermoduls eingeholt und der Anwendung bei Zugriff auf den vollständen Parametersatz übergeben werden.

Die in Figur 2 gezeigte Ausführungsform ist eingerichtet, Lese- und Schreibzugriffe von anderen Netzwerkknoten zu erhalten. Dies kann beispielsweise im Zuge einer ersten Konfiguration einer neuen Komponente im Netzwerk erfolgen; ferner können derartige Zugriffe im normalen Betrieb der Komponente erfolgen, um diese zu steuern; außerdem können solche Zugriffe vorgenommen werden, um die Komponente neu zu konfigurieren.

Zur Durchführung einer ersten Konfiguration wählt ein Installateur zunächst den zu verwendenden Parametersatz. Dies kann mittels der Konfigurationsanwendung 210 oder über eine auf einer anderen Komponente ablaufende Konfigurationsanwendung erfolgen. Nach der Auswahl des Parametersatzes kann der Installateur die Parameter des ausgewählten Satzes mit Kommunikationsdatenpunkten, also beispielsweise anderen Komponenten, verknüpfen. Derartige Verknüpfungen können ebenfalls über die genannten Anwendungen realisiert werden und werden dezentral in den beteiligten Kommunikationsdatenpunkten und/oder zentral in einem Server des Netzwerks gespeichert. In der Folge kann ein Kommunikationsdatenpunkt über das Netzwerk Befehle an die Komponente senden, um auf Parameter und deren Werte lesend oder schreibend zuzugreifen und insbesondere um die Komponente zu steuern. Beispielsweise kann bereits beim Schreiben eines Parameterwertes eine entsprechende Funktion zur Steuerung der Komponente aufgerufen werden; alternativ sind separate Befehle zum Schreiben und Steuern erforderlich.

Der Konfigurationsvorgang kann später wiederholt werden, wobei der einmal ausgewählte Parametersatz verwendet wird. Hat der Installateur den reduzierten Parametersatz ausgewählt, besteht die Möglichkeit, auf den vollständigen Parametersatz zu wechseln; Konflikte beim Setzen und Lesen von Parametern sind dabei ausgeschlossen, da der reduzierte Parametersatz eine Teilmenge des vollständigen Parametersatzes darstellt. Wird jedoch der vollständige Parametersatz ausgewählt, kann die Erfindung eine Rückkehr zu dem reduzierten Parametersatz ausschließen, beispielsweise mittels Setzen eines entsprechenden Flags; hierdurch vermeidet die Erfindung Konflikte, die beispielsweise aufgrund von Parameterabhängigkeiten entstehen könnten.

Die an die Komponente gesendeten Befehle enthalten Zugriffe auf Parameter. Die Komponente erhält diese über eine geeignete Schnittstelle oder ein Schnittstellenmodul. Diese Schnittstelle umfasst übliche Hardware- und Softwarebestandteile, die eine drahtgebundene oder drahtlose Kommunikation im Netzwerk ermöglichen. Das Format derartiger Zugriffe folgt dem verwendeten Netzwerkprotokoll oder den Definitionen des verwendeten Standards zur Gebäudeautomation. Handelt es sich bei dem Zugriff um einen Lesezugriff, liefert die Komponente aktuell verwendete Parameter und/oder deren Werte zurück. Beispielsweise kann ein solcher Lesezugriff pauschal sämtliche Parameter dieser Komponente anfordern und erhält als Antwort eine Liste der Parameter mit zugeordneten Parameterwerten; alternativ kann ein Lesezugriff einen konkreten Parameter angeben, und erhält als Antwort den aktuellen Wert dieses Parameters. Solche Zugriffe können beispielsweise im Wege einer Konfiguration aus der Ferne vorgenommen werden, beispielsweise von einer Konfigurationsanwendung, die auf einem anderen Netzwerkknoten abläuft. Die auf diese Weise gelesenen Parameter und Werte können in dieser Konfigurationsanwendung angezeigt und dort auch geändert werden. Eine solche Änderung führt wiederum zu einem Schreibbefehl, der an die Komponente gesendet wird. Ein Schreibbefehl umfasst wenigstens einen der Parameter, die die Komponente kennt, sowie einen zugeordneten Wert, auf den dieser Parameter zu setzen ist. Bei Erhalt eines solchen Schreibbefehls wird die Komponente den Parameter auf den angegeben Wert setzen.

Neben diesem Konfigurationsbetrieb ist die Komponente eingerichtet, in einem normalen Betrieb Steuerbefehle zu empfangen. Ähnlich wie bei Schreibbefehlen enthält ein Steuerbefehl einen Parameter sowie einen Wert. Der Steuerbefehl kann etwa bei Betätigung einer weiteren Netzwerkkomponente ausgelöst werden, beispielsweise eines Schalters, der zuvor mittels Konfiguration durch einen Installateur verknüpft wurde durch Auswählen eines Befehls, einer Zielkomponente, einem Parameter sowie einem Parameterwert. Der Parameterwert hängt von der Schalteigenschaft der weiteren Netzwerkkomponente ab; handelt es sich beispielsweise um einen stufenlosen Regler, der einen Wertebereich von 0 bis 100 Prozent ansteuert, und ist dieser Regler mit einem Lüfter als Zielkomponente verbunden, so kann bei Einstellen des Reglers auf eine konkrete Stellung ein entsprechender Parameterwert sowie zugeordneter Parameter in einem Steuerbefehl an die Zielkomponente, hier einen Lüfter, gesendet werden. Dort wird die Funktionalität anhand des Befehls gesteuert und der Lüfter auf eine Leistung eingestellt, die dem übergebenen Wert entspricht. Je nach Konfiguration wird der Wert zugleich gespeichert, um bei nachfolgendem Aus- und Einschalten der Komponente als Einschaltwert verwendet zu werden.

Ist der reduzierte Parametersatz ausgewählt, können Zugriffe auf Parameter in zwei alternativen Ausführungsformen erfolgen.

In einer ersten Ausführungsform erfolgen Lese- und Schreibzugriffe über den Gerätestack 270 direkt auf einen in dem Zugriff angegebenen Parameter, ohne dass das Adaptermodul verwendet wird. In dieser Ausführungsform sind die reduzierten Parameter zwar lediglich Verweise auf die entsprechenden Parameter des vollständigen Parametersatzes. Jedoch werden die zugeordneten Parameterwerte unabhängig und separat von den Parameterwerten des vollständigen Parametersatzes gespeichert und können von diesen abweichen. Wird im Zuge einer Konfiguration auf den vollständigen Parametersatz gewechselt, so kann auf die bereits verwendeten Werte des reduzierten Parametersatzes nicht mehr zugegriffen werden.

In einer zweiten Ausführungsform erfolgen Lese- und Schreibzugriffe über den Gerätestack 270 mittels Adaptermodul. Hierzu wird anhand des im Zugriff angegebenen Parameters des reduzierten Parametersatzes mittels Adaptermodul der entsprechende Parameter des vollständigen Satzes ermittelt und dessen Wert geschrieben beziehungsweise gelesen. Bei einem Wechsel auf den vollständigen Satz können die einmal geschriebenen Werte weiter verwendet werden.

In beiden Ausführungsformen verwendet das Adaptermodul eine Datenstruktur, die die vollständigen auf die reduzierten Parameter abbildet und die reduzierten Parameter lediglich als Verweise auf die vollständigen Parameter darstellt. Ein Unterschied besteht lediglich darin, dass die Parameterwerte in der ersten Ausführungsform separat in Verbindung mit dem jeweiligen reduzierten Parametern gespeichert und in der zweiten Ausführungsform immer in Verbindung mit den zugrundeliegenden Parametern des vollständigen Satzes gespeichert werden. In beiden Ausführungsformen kann ein Zugriff immer angeben, ob der jeweilige Parameter aus dem reduzierten oder dem vollständigen Satz gelesen beziehungsweise geschrieben werden soll; dies ist jedoch optional, da der ausgewählte Parametersatz mittels Konfiguration festgelegt wird.

Unabhängig davon, welcher Parametersatz festgelegt wurde, kann die Komponente bei Erhalt eines Zugriffs selbständig prüfen, ob der zu lesende oder zu schreibende Parameter in dem reduzierten Parametersatz überhaupt enthalten ist. Ist dies nicht der Fall, kann die Komponente selbständig den Wechsel von dem reduzierten zu dem vollständigen Parametersatz vollziehen, beispielsweise durch Setzen eines Flags. Bei Erhalt weiterer Zugriffe wird dann ausschließlich auf den vollständigen Parametersatz zugegriffen; dies wird durch Prüfen des Flags bei Erhalt eines Zugriffs gewährleistet.

Wie bereits mehrfach beschrieben, kann die Erfindung Zugriffe auf den reduzierten Parametersatz ausschließen, wenn zwischenzeitlich beziehungsweise von Anfang an auf den vollständigen Parametersatz zugegriffen wurde, etwa mittels des erwähnten Flags. In einer speziellen Ausführungsform ermöglicht die Erfindung jedoch, die Komponente so zu konfigurieren, dass ausgewählte Parameter des reduzierten Satzes auch nach Verwendung des vollständigen Satzes zugreifbar bleiben. Zu diesem Zweck kann beispielsweise mittels einer Anwendung eine Auswahl solcher Parameter getroffen werden. Zeigt das Flag bei einer Prüfung an, dass ein Zugriff auf die reduzierten Parameter nicht mehr zulässig ist, kann der Zugriff trotzdem zugelassen werden, wenn der angegebene Parameter einer der auswählten Parameter ist.

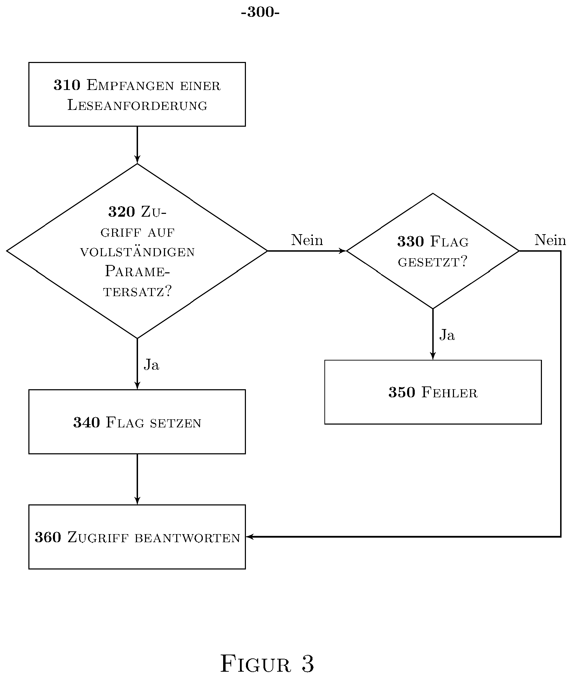

Die Figur 3 zeigt ein beispielhaftes erfindungsgemäßes Verfahren. Der Gegenstand dieses Verfahren umfasst sämtliche hier bereits erläuterte Merkmale; diese sollen daher nicht in allen Details wiederholt werden, und können ohne weiteres mit der folgenden Darstellung kombiniert werden.

Figur 3 zeigt beispielhaft Erhalten 310 eines Lesezugriffs an einer Komponente, die in ein Netzwerk integriert ist. Der Lesezugriff erfolgt über eine Schnittstelle, mit der die Komponente an das Netzwerk angeschlossen ist, und enthält einen zu lesenden Parameternamen oder eine Anforderung, sämtliche Parameter auszugeben.

In einigen Ausführungsformen wird anschließend geprüft 320, ob die Anforderung auf den vollständigen Parametersatz gerichtet ist. Diese Angabe kann in der Anforderung enthalten sein, oder kann unabhängig von der Anforderung geprüft werden durch Bestimmen eines aktuellen Modus, der beispielsweise in einer früheren Konfiguration der Komponente festgelegt wurde. Diese Prüfung kann entfallen, wenn der Zugriff eine Anforderung sämtlicher Parameter enthält.

Ist der Parameter nicht auf den vollständigen Parametersatz gerichtet, wird geprüft 330, ob ein Flag gesetzt ist. Das Flag zeigt an, dass auf den reduzierten Parametersatz nicht zugegriffen werden kann. Ist das Flag nicht gesetzt, wird der Zugriff durch Auslesen des Parameters aus dem vollständigen Parametersatz beantwortet 360. Das Auslesen umfasst Lesen des entsprechenden Parameters und/oder zugeordneter Parameterwerte sowie Senden einer Antwortnachricht an die Adresse des Kommunikationsdatenpunktes, von dem der Zugriff stammte. Ist das Flag gesetzt, wird ein Fehler ausgegeben 350 und an den Sender der Anforderung übermittelt.

Ist die Anforderung hingegen auf den vollständigen Parametersatz gerichtet, wird das Flag gesetzt 340, um zu verhindern, dass künftige Anforderungen auf den reduzierten Parametersatz durchgeführt werden. Anschließend wird der Zugriff durch Auslesen des oder der Parameter aus dem vollständigen Parametersatz und Senden derselben beantwortet 360. Alternativ zum Ausgeben eines Fehlers kann das Verfahren Zugriffe auf bestimmte Parameter bearbeiten, die zuvor entsprechend markiert wurden, etwa durch eine herstellerseitige Konfiguration.

Das Verfahren aus Figur 3 kann analog für Schreibzugriffe auf eine Komponente durchgeführt werden. Anders als in dem in Figur 3 gezeigten Verfahren wird der Zugriff beantwortet 360 durch Beschreiben eines im Zugriff definierten Parameters durch einen definierten Wert.

Ist der Schreibzugriff auf den reduzierten Parametersatz gerichtet, kann der Parameter auf zwei verschiedene Arten geschrieben werden. In einer ersten Ausführungsform werden Parameterwerte in Verbindung mit den entsprechenden Parametern gespeichert, beispielsweise in einer Datenstruktur, die nach Parametern indexiert ist und die Parameterwerte an demjenigen Index enthält, der dem zugeordneten Parameter entspricht. In dieser Ausführungsform wird der Parameter an die betreffende Stelle geschrieben. In dieser Ausführungsform können die Parameter des reduzierten Parametersatzes Verweise auf entsprechende Parameter in dem vollständigen Parametersatz sein; dabei werden für den reduzierten Parametersatz also gegebenenfalls andere Werte gespeichert als für den vollständigen Parametersatz.

In einer zweiten Ausführungsform soll für jeden Parameter des reduzierten Satzes derselbe Wert gespeichert werden wie in dem vollständigen Parametersatz; gegebenenfalls nimmt der Parameter des vollständigen Satzes den Wert des entsprechenden Parameters im reduzierten Satz an. Wie bereits erläutert, ist in vielen hier beschriebenen Ausführungsformen jeder Parameter des reduzierten Satzes als Verweis auf einen entsprechenden Parameter des vollständigen Satzes implementiert. In der zweiten Ausführungsform umfasst das Schreiben des Parameters daher Ermitteln desjenigen Parameters im vollständigen Parametersatz, auf den der Parameter des reduzierten Satzes verweist. Dies wird durch das Adaptermodul der Komponente vorgenommen, das die Abbildungen zwischen beiden Sätzen verwaltet. Anschließend kann der in dem Schreibzugriff übergebene Parameter an die korrekte Stelle in einer Datenstruktur geschrieben werden, die den vollständigen Parametersatz enthält. Wie bei den zuvor beschriebenen Strukturen kann diese Datenstruktur über die Parameter indexiert sein und an jedem Index der Wert gespeichert sein, der diesem Parameter entspricht. Da der Parameter des reduzierten Satzes lediglich auf den entsprechenden Parameter des vollständigen Satzes verweist, kann der Parameterwert durch Lesen dieses Verweises bestimmt werden.

In allen hier beschriebenen Ausführungsformen können die Parametersätze implementiert sein als Arrays, Listen, Aufzählungstypen oder auch Baumstrukturen; letztere eignen sich insbesondere, wenn Abhängigkeiten zwischen Parametern modelliert werden. Beispielsweise können die Parameter in Knoten eines Baumes so angeordnet sein, dass alle Parameter als Knoten eines Teilbaumes von allen höheren Knoten des Baumes abhängen. Ein abhängiger Parameter erfordert, dass alle Parameter, von denen er abhängt, im gleichen Parametersatz enthalten sind. Auf diese Weise kann auf Herstellerseite einfacher entschieden werden, welche der Parameter aus dem vollständigen Satz in den reduzierten Satz aufgenommen werden. Die Parameter können durch einschlägig bekannte Variablentypen implementiert werden. Für die Implementierung der Modi eignet sich beispielsweise ein Aufzählungstyp.

Ausführungsformen der Erfindung umfassen auch elektronische Medien mit darauf gespeicherten Befehlen, die, wenn sie durch einen oder mehrere Prozessoren ausgeführt werden, eines der hier beschriebenen Verfahren durchführen.

Die Erfindung ermöglicht eine effiziente Konfiguration und Verwaltung von Parametern und Parameterwerten, die zur Steuerung einer Komponente in einem Netzwerk dienen. Ausführungsformen der Erfindung vereinfachen die Voreinstellungen für Komponenten auf Herstellerseite, da mit einer Komponente unterschiedliche Parametersätze ausgeliefert werden können, wobei ein Parametersatz eine Teilmenge eines anderen ist. Besonders vorteilhaft sind erfindungsgemäße Implementationen, in denen Parameter einer solchen Teilmenge als Verweise auf die entsprechenden Parameter der Obermenge implementiert sind, weil hierdurch flexible Konfigurationen der gespeicherten Parameterwerte ermöglicht werden.

## Patentansprüche

1. Vorrichtung (200) zur Steuerung eines Haustechnik-Netzwerks, umfassend:
einen Speicher mit einem darauf gespeicherten ersten Konfigurationsstack (280), einem zweiten Konfigurationsstack (270) und einem Adaptermodul (240); und
ein Schnittstellenmodul;
wobei der erste Konfigurationsstack (280) eine erste Vielzahl an Parametern (250) mit zugeordneten Parameterwerten und Kommunikationsdatenpunkten enthält;
wobei der zweite Konfigurationsstack (270) eine zweite Vielzahl an Parametern (220) mit zugeordneten Parameterwerten und Kommunikationsdatenpunkten enthält;
wobei die Kommunikationsdatenpunkte Netzwerkknoten darstellen, die mit der Vorrichtung vernetzt sind und die auf die ersten oder zweiten Parameter (250, 220) der Vorrichtung zugreifen;
wobei die zweite Vielzahl an Parametern (220) mit zugeordneten Parameterwerten und Kommunikationsdatenpunkten Teilmenge der ersten Vielzahl an Parametern (250) ist;
wobei das Adaptermodul (240) eine Datenstruktur enthält, die für jeden Parameter der zweiten Vielzahl an Parametern (220) eine Referenz auf einen Parameter der ersten Vielzahl (250) speichert;
wobei die Vorrichtung (200) eingerichtet ist, Lese- und Schreibzugriffe von Netzwerkknoten in dem Haustechnik-Netzwerk über das Schnittstellenmodul zu erhalten;
wobei die Vorrichtung ferner eingerichtet ist, ein Flag zu setzen, falls ein Lese- oder Schreibzugriff auf die erste Vielzahl (250) gerichtet ist, und im Falle eines Lesezugriffs Parameter und zugehörige Parameterwerte der ersten Vielzahl (250) bereitzustellen sowie im Falle eines Schreibzugriffs Parameterwerte der ersten Vielzahl (250) auf Parameterwerte, die in dem Schreibzugriff angegeben sind, zu setzen;
wobei die Vorrichtung (200) ferner eingerichtet ist, einen Fehler auszugeben, falls ein Lese- oder Schreibzugriff auf die zweite Vielzahl (220) gerichtet ist und das Flag gesetzt ist, und, falls das Flag nicht gesetzt ist, im Falle eines Lesezugriffs Parameter und zugehörige Parameterwerte der zweiten Vielzahl (220) bereitzustellen sowie im Falle eines Schreibzugriffs Parameterwerte der zweiten Vielzahl (220) auf Parameterwerte, die in dem Schreibzugriff angegeben sind, zu setzen;
wobei das Setzen und Lesen von Parameterwerten mittels des Adaptermoduls (240) durchgeführt wird, und wobei das Setzen eines Parameterwerts eine Funktionalität der Vorrichtung anhand dieses Parameterwerts steuert.

2. Vorrichtung (200) nach Anspruch 1, wobei das Adaptermodul (240) ein Bestandteil des zweiten Konfigurationsstacks (270) ist.

3. Vorrichtung (200) nach Anspruch 1 oder 2, wobei die erste und die zweite Vielzahl an Parametern (220, 250) mit zugeordneten Parameterwerten als Variable implementiert ist, die einen Aufzählungstyp umfasst und die Parameter den zugeordneten Parameterwerten zuordnet.

4. Vorrichtung (200) nach Anspruch 1, wobei der Schreibzugriff ferner angibt, ob der Parameter in der ersten oder der zweiten Vielzahl (220, 250) gesetzt werden soll, und die Vorrichtung (200) den Parameter in der betreffenden Vielzahl (220, 250) setzt.

5. Vorrichtung (200) nach Anspruch 1, wobei die Vorrichtung (200) ferner eingerichtet ist, das Prüfen anhand der Datenstruktur des Adaptermoduls (240) vorzunehmen.

6. Verfahren (300) zur Ausführung in einem Netzwerkknoten eines Haustechnik-Netzwerks, umfassend:
Erhalten (310) eines Lese- oder Schreibzugriffs von einem anderen Netzknoten in dem Haustechnik-Netzwerk über ein Schnittstellenmodul des eigenen Netzknotens;
Setzen (340) eines Flags, falls ein Lese- oder Schreibzugriff auf eine erste Vielzahl an Parametern (250) gerichtet ist (320), und, im Falle eines Lesezugriffs, Bereitstellen (360) von Parametern und zugehörigen Parameterwerten der ersten Vielzahl (250) sowie, im Falle eines Schreibzugriffs, Setzen von Parameterwerten der ersten Vielzahl (250) auf Parameterwerte, die in dem Schreibzugriff angegeben sind;
Ausgeben (350) eines Fehlers, falls ein Lese- oder Schreibzugriff auf eine zweite Vielzahl an Parametern (220) gerichtet ist und das Flag gesetzt ist, und, falls das Flag nicht gesetzt ist, im Falle eines Lesezugriffs Bereitstellen von Parametern und zugehörigen Parameterwerten der zweiten Vielzahl (220) sowie, im Falle eines Schreibzugriffs, Setzen von Parameterwerten der zweiten Vielzahl (220) auf Parameterwerte, die in dem Schreibzugriff angegeben sind;
wobei die erste Vielzahl an Parametern (250) mit zugeordneten Parameterwerten durch einen ersten Konfigurationsstack (280) des Netzwerkknotens bereitgestellt wird und die zweite Vielzahl an Parametern (250) mit zugeordneten Parameterwerten durch einen zweiten Konfigurationsstack (270) des Netzwerkknotens bereitgestellt wird, und wobei die zweite Vielzahl an Parametern (250) mit zugeordneten Parameterwerten eine Teilmenge der ersten Vielzahl an Parametern (250) ist;
wobei der erste und der zweite Kommunikationsstack (270, 280) neben den zugeordneten Parameterwerten zugeordnete Kommunikationsdatenpunkte enthalten, die Netzwerkknoten darstellen, die auf die ersten oder zweiten Parameter (250, 220) zugreifen;
wobei das Setzen und Lesen von Parameterwerten mittels eines Adaptermoduls (240) durchgeführt wird, das für jeden Parameter der zweiten Vielzahl an Parametern (220) eine Referenz auf einen Parameter der ersten Vielzahl (250) speichert; und
wobei das Setzen eines Parameterwerts eine Funktionalität des Netzwerkknotens anhand dieses Parameterwerts steuert.

7. Verfahren (300) nach Anspruch 6, ferner umfassend:
Als Antwort auf einen Schreibzugriff Ermitteln, ob der Parameter in der ersten oder der zweiten Vielzahl (220, 250) gesetzt werden soll, und Setzen des Parameters in der betreffenden Vielzahl (220, 250).

8. Verfahren nach einem der Ansprüche 6 oder 7, wobei das Prüfen anhand einer Datenstruktur eines Adaptermoduls (240) des Netzwerkknotens vorgenommen wird.

## Claims

1. An apparatus (200) for controlling a home automation network, comprising:
a memory having stored thereon a first configuration stack (280), a second configuration stack (270), and an adapter module (240); and
an interface module;
wherein the first configuration stack (280) includes a first plurality of parameters (250) with associated parameter values and communication data points;
wherein the second configuration stack (270) includes a second plurality of parameters (220) with associated parameter values and communication data points;
wherein the communication data points represent network nodes that are networked with the apparatus and that access the first or second parameters (250, 220) of the apparatus;
wherein the second plurality of parameters (220) with associated parameter values and communication data points is a subset of the first plurality of parameters (250);
wherein the adapter module (240) includes a data structure that stores, for each parameter of the second plurality of parameters (220), a reference to a parameter of the first plurality (250);
wherein the apparatus (200) is configured to obtain read and write accesses from network nodes in the home automation network via the interface module;
wherein the apparatus is further configured to set a flag if a read or write access is directed to the first plurality (250), and in the case of a read access, to provide parameters and associated parameter values of the first plurality (250), and in the case of a write access, to set parameter values of the first plurality (250) to parameter values indicated in the write access;
wherein the apparatus (200) is further configured to output an error if a read or write access is directed to the second plurality (220) and the flag is set, and if the flag is not set, in the case of a read access, to provide parameters and associated parameter values of the second plurality (220), and in the case of a write access, to set parameter values of the second plurality (220) to parameter values indicated in the write access;
wherein the setting and reading of parameter values is performed by means of the adapter module (240), and wherein the setting of a parameter value controls a functionality of the apparatus based on this parameter value.

2. The apparatus (200) according to claim 1, wherein the adapter module (240) is a component of the second configuration stack (270).

3. The apparatus (200) according to claim 1 or 2, wherein the first and the second plurality of parameters (220, 250) are implemented with associated parameter values as a variable comprising an enumeration type and associating the parameters with the associated parameter values.

4. The apparatus (200) according to claim 1, wherein the write access further indicates whether the parameter is to be set in the first or the second plurality (220, 250), and the apparatus (200) sets the parameter in the respective plurality (220, 250).

5. The apparatus (200) according to claim 1, wherein the apparatus (200) is further configured to perform the checking based on the data structure of the adapter module (240).

6. A method (300) for execution in a network node of a home automation network, comprising:
obtaining (310) a read or write access from another network node in the home automation network via an interface module of the own network node;
setting (340) a flag if a read or write access is directed (320) to a first plurality of parameters (250), and in the case of a read access, providing (360) parameters and associated parameter values of the first plurality (250), and in the case of a write access, setting parameter values of the first plurality (250) to parameter values indicated in the write access;
outputting (350) an error if a read or write access is directed to a second plurality of parameters (220) and the flag is set, and if the flag is not set, in the case of a read access, providing parameters and associated parameter values of the second plurality (220), and in the case of a write access, setting parameter values of the second plurality (220) to parameter values indicated in the write access;
wherein the first plurality of parameters (250) with associated parameter values is provided by a first configuration stack (280) of the network node and the second plurality of parameters (250) with associated parameter values is provided by a second configuration stack (270) of the network node, and wherein the second plurality of parameters (250) with associated parameter values is a subset of the first plurality of parameters (250);
wherein the first and second communication stacks (270, 280) include, in addition to the associated parameter values, associated communication data points representing network nodes that access the first or second parameters (250, 220);
wherein the setting and reading of parameter values is performed by means of an adapter module (240) that stores, for each parameter of the second plurality of parameters (220), a reference to a parameter of the first plurality (250); and
wherein the setting of a parameter value controls a functionality of the network node based on this parameter value.

7. The method (300) according to claim 6, further comprising:
in response to a write access, determining whether the parameter is to be set in the first or the second plurality (220, 250), and setting the parameter in the respective plurality (220, 250).

8. The method according to any one of claims 6 or 7, wherein the checking is performed based on a data structure of an adapter module (240) of the network node.

## Revendications

1. Dispositif (200) pour commander un réseau domotique, comprenant :
une mémoire dans laquelle sont enregistrés une première pile de configuration (280), une deuxième pile de configuration (270) et un module adaptateur (240) ; et
un module d'interface ;
la première pile de configuration (280) contenant une première pluralité de paramètres (250) avec des valeurs de paramètres et des points de données de communication attribués ;
la deuxième pile de configuration (270) contenant une deuxième pluralité de paramètres (220) avec des valeurs de paramètres et des points de données de communication attribués ;
les points de données de communication représentant des noeuds de réseau qui sont connectés au dispositif et qui accèdent aux premiers ou deuxièmes paramètres (250, 220) du dispositif ;
la deuxième pluralité de paramètres (220) avec des valeurs de paramètres et des points de données de communication attribués étant un sous-ensemble de la première pluralité de paramètres (250) ;
le module adaptateur (240) contenant une structure de données qui stocke, pour chaque paramètre de la deuxième pluralité de paramètres (220), une référence à un paramètre de la première pluralité (250) ;
le dispositif (200) étant configuré pour recevoir des accès en lecture et en écriture provenant de noeuds de réseau dans le réseau domotique via le module d'interface ;
le dispositif étant en outre configuré pour activer un indicateur si un accès en lecture ou en écriture est dirigé vers la première pluralité (250) et, dans le cas d'un accès en lecture, pour mettre à disposition des paramètres et des valeurs de paramètres associées de la première pluralité (250) et, dans le cas d'un accès en écriture, pour définir des valeurs de paramètres de la première pluralité (250) sur des valeurs de paramètres spécifiées dans l'accès en écriture ;
le dispositif (200) étant en outre conçu pour émettre une erreur si un accès en lecture ou en écriture est dirigé vers la deuxième pluralité (220) et si l'indicateur est activé, et, si l'indicateur n'est pas activé, dans le cas d'un accès en lecture, pour mettre à disposition des paramètres et des valeurs de paramètres associées de la deuxième pluralité (220) et, dans le cas d'un accès en écriture, pour définir des valeurs de paramètres de la deuxième pluralité (220) sur des valeurs de paramètres spécifiées dans l'accès en écriture ;
la définition et la lecture des valeurs de paramètres étant effectuées au moyen du module adaptateur (240), et la définition d'une valeur de paramètre commandant une fonctionnalité du dispositif à l'aide de cette valeur de paramètre.

2. Dispositif (200) selon la revendication 1, le module adaptateur (240) étant un composant de la deuxième pile de configuration (270).

3. Dispositif (200) selon la revendication 1 ou 2, la première et la deuxième pluralité de paramètres (220, 250) avec des valeurs de paramètres attribuées étant implémentées sous forme de variable qui comprend un type d'énumération et qui attribue les paramètres aux valeurs de paramètres attribuées.

4. Dispositif (200) selon la revendication 1, dans lequel l'accès en écriture indique en outre si le paramètre doit être défini dans la première ou la deuxième pluralité (220, 250) et le dispositif (200) définit le paramètre dans la pluralité correspondante (220, 250).

5. Dispositif (200) selon la revendication 1, le dispositif (200) étant en outre agencé pour effectuer la vérification à l'aide de la structure de données du module adaptateur (240).

6. Procédé (300) destiné à être exécuté dans un nœud de réseau d'un réseau domotique, comprenant :
l'obtention (310) d'un accès en lecture ou en écriture à partir d'un autre nœud de réseau dans le réseau domotique via un module d'interface du nœud de réseau respectif ;
la définition (340) d'un indicateur si un accès en lecture ou en écriture est dirigé (320) vers une première pluralité de paramètres (250) et, dans le cas d'un accès en lecture, la mise à disposition (360) des paramètres et des valeurs de paramètres associées de la première pluralité (250) et, dans le cas d'un accès en écriture, la définition des valeurs de paramètres de la première pluralité (250) sur des valeurs de paramètres spécifiées dans l'accès en écriture ;
l'émission (350) d'une erreur si un accès en lecture ou en écriture est dirigé vers une deuxième pluralité de paramètres (220) et si l'indicateur est activé, et, si l'indicateur n'est pas activé, dans le cas d'un accès en lecture, la mise à disposition de paramètres et de valeurs de paramètres associées de la deuxième pluralité (220) et, dans le cas d'un accès en écriture, la définition des valeurs de paramètres de la deuxième pluralité (220) sur les valeurs de paramètres spécifiées dans l'accès en écriture ;
la première pluralité de paramètres (250) avec des valeurs de paramètres associées étant mise à disposition par une première pile de configuration (280) du nœud de réseau et la deuxième pluralité de paramètres (250) avec des valeurs de paramètres associées étant mise à disposition par une deuxième pile de configuration (270) du nœud de réseau, et dans lequel la deuxième pluralité de paramètres (250) avec des valeurs de paramètres associées est un sous-ensemble de la première pluralité de paramètres (250) ;
les première et deuxième piles de communication (270, 280) contenant, en plus des valeurs de paramètres attribuées, des points de données de communication attribués qui représentent des nœuds de réseau qui accèdent aux premiers ou deuxièmes paramètres (250, 220) ;
la définition et la lecture des valeurs de paramètres étant effectuées au moyen d'un module adaptateur (240) qui stocke, pour chaque paramètre de la deuxième pluralité de paramètres (220), une référence à un paramètre de la première pluralité (250) ; et
la définition d'une valeur de paramètre commandant une fonctionnalité du nœud de réseau sur la base de cette valeur de paramètre.

7. Procédé (300) selon la revendication 6, comprenant en outre :
en réponse à une demande d'accès en écriture, le fait de déterminer si le paramètre doit être défini dans la première ou la deuxième pluralité (220, 250) et la définition du paramètre dans la pluralité correspondante (220, 250).

8. Procédé selon l'une des revendications 6 ou 7, dans lequel la vérification est effectuée à l'aide d'une structure de données d'un module adaptateur (240) du nœud de réseau.
